# EUROPÄISCHE PATENTSCHRIFT

(11) **EP 3 566 571 B1**
(45) Veröffentlichungstag und Bekanntmachung des Hinweises auf die Patenterteilung: **24.02.2021**
(21) Anmeldenummer: 19171212.4
(22) Anmeldetag: 25.04.2019
(51) Int. Cl.: A01K 5/00, A01F 25/20

(54) **VORRICHTUNG ZUR ENTNAHME VON FUTTER**
DEVICE FOR EXTRACTING FOOD
DISPOSITIF DE PRÉLÈVEMENT D'ALIMENT POUR ANIMAUX

(30) Priorität: 09.05.2018 AT 503922018; 08.11.2018 AT 509582018
(43) Veröffentlichungstag der Anmeldung: 13.11.2019
(73) Patentinhaber: Wasserbauer GmbH, 4595 Waldneukirchen (AT)
(72) Erfinder: Wasserbauer, Franz, 4595 Waldneukirchen (AT)
(74) Vertreter: KLIMENT & HENHAPEL

(56) Entgegenhaltungen:
- WO-A1-2017/069614
- DE-A1- 2 225 783
- DE-A1- 2 514 308
- DE-A1- 2 809 928
- DE-A1- 19 855 082
- NL-B1- 2 015 654
- US-A- 2 877 057

## Beschreibung

### GEBIET DER ERFINDUNG

Die Erfindung betrifft eine Vorrichtung zur Entnahme von Futter aus einem Futterlager, umfassend eine Trenneinrichtung zum Abtrennen von Futter vom Futterlager, eine Fördereinrichtung zur Förderung von abgetrenntem Futtermaterial von einem an der Trenneinrichtung angeordneten Aufgabebereich der Fördereinrichtung zu einem Abgabebereich der Fördereinrichtung, sowie einen zur Befüllung mit abgetrenntem Futtermaterial in einer Befüllposition im Abgabebereich der Fördereinrichtung vorgesehenen Transportbehälter, wobei die Trenneinrichtung ein als Fräse ausgeführtes Trennwerkzeug umfasst, und die Fördereinrichtung als Gebläse ausgeführt ist, wobei der Aufgabebereich als eine im Bereich der Fräse angeordnete Ansaugöffnung des Gebläses ausgeführt ist, und der Abgabebereich als eine oberhalb des Transportbehälters in seiner Befüllposition angeordnete Auswurföffnung des Gebläses ausgeführt ist.

### STAND DER TECHNIK

Zur Fütterung von Viehbeständen ist es erforderlich Futter wie beispielsweise Silage, Grundfutter oder Heu aus einem Futterlager zu entnehmen, einem Mischbehälter zuzuführen und das abgetrennte und gemischte Futter zum Futtergang zu transportieren, wo die Futterablage erfolgt.

In der DE 201 05 747 U1 wird ein Futtertransporter mit Wiegeeinrichtung offenbart, wobei dieser einen Mischraum und eine Aufnahmevorrichtung umfasst, mit der vorzugsweise an Flachsilos Futter abgetrennt und in den Mischraum eingebracht wird.

Die EP 1 712 123 B1 offenbart eine Vorrichtung zum Entnehmen und Verarbeiten von Silage für Vieh umfassend eine Aufnahmevorrichtung, die aus einer auf einem Dreharm angeordneten Schneidplatte besteht, und einen Container für entnommene Silage.

In der DE 10 2014 116 882 A1 wird ein Futtertransporter offenbart, der im Wesentlichen einen Mischbehälter, eine Aufnahmevorrichtung, eine Ausbringvorrichtung für Silage und eine Wiegeeinrichtung für die aufzunehmende Silage umfasst.

Weitere Vorrichtungen zur Entnahme von Futter wurden in der WO 2017/069614 A1, NL 2 015 654 B1, DE 198 55 082 A1, US 2 877 057 A, DE 22 25 783 A1, DE 25 14 308 A1 und der DE 28 09 928 A1 beschrieben.

Ein Nachteil der bekannten Vorrichtungen besteht allerdings darin, dass Futterhaufen, welche sich durch die beim Abtrennen anfallenden Bröckelverluste am Boden vor der Schneidfläche des Futterlagers ansammeln, von der Fördereinrichtung nicht erreicht und aufgenommen werden können. Besonders zerklüftete Schneidflächen neigen zum Bröckeln, so dass sich häufig am Boden vor der Schneidfläche leicht verderbliches Futter ansammelt, was einerseits die Sauberhaltung der Bodenfläche des Futterlagers erschwert und andererseits Futterverluste ansteigen lässt.

### AUFGABE DER ERFINDUNG

Es ist daher das Ziel der Erfindung eine Vorrichtung zur Entnahme von Futter aus einem Futterlager vorzuschlagen, die die Nachteile des Stands der Technik überwindet und Futterverluste verringert sowie die Sauberhaltung der Bodenfläche des Futterlagers erleichtert.

### DARSTELLUNG DER ERFINDUNG

Dieses Ziel wird durch die Merkmale von Anspruch 1 erreicht. Anspruch 1 bezieht sich auf eine Vorrichtung zur Entnahme von Futter aus einem Futterlager, umfassend eine Trenneinrichtung zum Abtrennen von Futter vom Futterlager, eine Fördereinrichtung zur Förderung von abgetrenntem Futtermaterial von einem an der Trenneinrichtung angeordneten Aufgabebereich der Fördereinrichtung zu einem Abgabebereich der Fördereinrichtung, sowie einen zur Befüllung mit abgetrenntem Futtermaterial in einer Befüllposition im Abgabebereich der Fördereinrichtung vorgesehenen Transportbehälter, wobei die Trenneinrichtung ein als Fräse ausgeführtes Trennwerkzeug umfasst, und die Fördereinrichtung als Gebläse ausgeführt ist, wobei der Aufgabebereich als eine im Bereich der Fräse angeordnete Ansaugöffnung des Gebläses ausgeführt ist, und der Abgabebereich als eine oberhalb des Transportbehälters in seiner Befüllposition angeordnete Auswurföffnung des Gebläses ausgeführt ist. Erfindungsgemäß wird hierbei vorgeschlagen, dass der Transportbehälter als ein unabhängig von der Trenneinrichtung verfahrbarer, selbstfahrender Wagen ausgeführt ist, der zugleich als Mischbehälter mit einem Mischer für das aufgenommene Futter ausgeführt ist und eine die Menge des aufgenommenen Futters überwachende Wiegeeinrichtung oder Volumenkontrolle aufweist.

Die erfindungsgemäße Vorrichtung zur Entnahme von Futter aus einem Futterlager lässt sich wie folgt zusammenfassen: Während die Fräse das Futter abtrennt, befindet sich sich der Transportbehälter in einer vorgegebenen Befüllposition, die sich innerhalb des Futterlagers oder außerhalb des Futterlagers befinden kann. Zum Befüllen des Transportbehälters nimmt der Transportbehälter zunächst eine Befüllposition ein, wobei nach Erreichen der Befüllposition die Trenneinrichtung aktiviert wird. Während der Befüllung ist es erforderlich das Trennwerkzeug zu bewegen, wobei in herkömmlicher Weise mithilfe aufwändiger Fördereinrichtungen unterschiedliche Förderstrecken zwischen dem Trennwerkzeug und dem Transportbehälter bewältigt werden müssen. Eine Möglichkeit zur Vereinfachung der Fördereinrichtung besteht in der Nachführung des Transportbehälters bei gleichbleibendem Aufgabebereich, oder in der Nachführung des Aufgabebereiches bei gleichbleibendem Abgabebereich. Erfindungsgemäß kann hingegen bei unbewegter Auswurföffnung die im Bereich der Fräse angeordnete Ansaugöffnung des Gebläses mit der Fräse mitgeführt werden, da mithilfe eines Gebläses unterschiedliche Förderstrecken leicht bewerkstelligt werden können. Die Verwendung einer Fräse stellt dabei sicher, dass das Futter beim Abtrennen vom Futterlager entsprechend zerkleinert wird, um es anschließend im Luftstrom eines Gebläses transportieren zu können.

Das abgetrennte Futtermaterial wird in weiterer Folge mit Hilfe des Gebläses schonend vom Bereich einer Schneidfläche in den Transportbehälter befördert. Das abgetrennte Futtermaterial wird somit durch den Transport im Luftstrom aufgelockert und belüftet, was die Bekömmlichkeit für das Vieh erhöht. Zusätzlich kann das Gebläse bei Annäherung der Fräse in den Nahbereich des Bodens auch auf den Boden gefallenes Futtermaterial aufsaugen, wodurch sich Bröckelverluste deutlich verringern und die Sauberhaltung der Bodenfläche des Futterlagers erleichtert wird. Nach Beendigung der Befüllung, die etwa durch eine Steuereinrichtung nach Vorgabe einer benötigten Materialmenge abgetrennter Silage in Zusammenwirken mit einer Wiegeeinrichtung des Transportbehälters vorgenommen werden kann, stoppt die Fräse und der Transportbehälter kann zu den Fütterungsstellen bewegt werden.

Erfindungsgemäß ist der Transportbehälter als ein verfahrbarer, selbstfahrender Wagen ausgeführt, wobei für eine Navigation des Transportbehälters zur Spurführung beispielsweise Leitdrähte, Induktionsschleifen, Magnete, Kameras, Laser-Sensorik oder Ultraschall-Sensorik, oder Positionsbestimmungssysteme wie z.B. GPS verwendet werden können. Da erfindungsgemäß eine unveränderte Befüllposition trotz bewegter Trenneinrichtung ermöglicht wird, muss der Transportbehälter lediglich eine vorgegebene Befüllposition, beispielsweise unterhalb der Auswurföffnung des Gebläses, anfahren. Der Transportbehälter ist zugleich als Mischbehälter mit einem Mischer für das aufgenommene Futter ausgeführt, wobei die Menge mittels einer Wiegeeinrichtung oder einer Volumenkontrolle überwacht wird. Der Transportbehälter verfügt ferner über eine Austragvorrichtung, über die das aufgenommene Futter am Ort der Futterausgabe dosiert beispielsweise in einem Futtergang abgelegt werden kann. Nach dem Befüllvorgang kann sich der Transportbehälter wieder unabhängig von der Trenneinrichtung autonom bewegen. Da die Trenneinrichtung und die Fördereinrichtung aber beim Futterlager verbleiben können, kann jene Komponente, die zum Ort der Futterablage bewegt werden muss, nämlich der Transportbehälter, klein und kompakt und vor allem mit wesentlich geringerem Gewicht ausgeführt werden. Der Transportbehälter umfasst im Wesentlichen nur den Mischraum für das abgetrennte Futter und allfällige Misch- und Wiegeeinrichtungen, sowie weitere Steuer- und Antriebseinheiten mit der entsprechenden Sensorik. Auf diese Weise kann der Transportbehälter auch leicht mit einem elektrischen Antrieb zur Vermeidung von Lärm- und Abgasemissionen ausgestattet werden. Freilich kann auch die Trenneinrichtung für ihre Bewegung relativ zum Futterlager mit einem elektrischen Antrieb ausgestattet werden, da die Fahrwege der Trenneinrichtung vergleichsweise kurz sind.

Die Fräse ist dabei in einer bevorzugten Ausführungsform auf einem verfahrbaren Gerüst angeordnet, sodass sich die Fräse mithilfe des verfahrbaren Gerüsts relativ zum Futterlager bewegen kann und somit unterschiedliche Positionen zum Abtrennen des Futters einnehmen kann.

Vorzugsweise umfasst das Gerüst ein erstes Gerüstteil sowie ein zweites Gerüstteil, wobei die Fräse am ersten Gerüstteil vertikal bewegbar geführt ist, und der erste Gerüstteil auf dem zweiten Gerüstteil horizontal bewegbar geführt ist. Das Gerüst des Trennwerkzeugs umfasst somit einen vertikalen Aufbau in Form des ersten Gerüstteils, sowie einen horizontalen Bodenteil in Form des zweiten Gerüstteils. Mit Hilfe des ersten Gerüstteils kann das Trennwerkzeug autonom vertikale Bahnen, beispielsweise beginnend von der oberen zur unteren Kante von Silage abtragen, und danach mithilfe des zweiten Gerüstteils in Querrichtung verschoben werden, um eine daneben liegende, vertikale Bahn an Silage abzutragen.

Der zweite Gerüstteil ist ferner vorzugsweise in einer senkrecht zur vertikalen Bewegungsrichtung des Trennwerkzeugs und senkrecht zur horizontalen Bewegungsrichtung des ersten Gerüstteils horizontal bewegbar, beispielsweise mithilfe von Rollen oder Rädern. Mit Hilfe der beiden Gerüstteile kann das Trennwerkzeug somit in einer senkrecht zur Bewegungsebene des Trennwerkzeugs orientierten Richtung bewegt werden, beispielsweise um eine Bewegbarkeit in Längsrichtung eines Flachsilos zu ermöglichen.

Bei einer bevorzugten Ausführungsvariante der erfindungsgemäßen Vorrichtung zur Entnahme von Futter ist zudem vorgesehen, dass das Gebläse einen flexiblen Schlauch, der die Ansaugöffnung mit der Auswurföffnung verbindet, umfasst. Die Flexibilität des Schlauchs kann etwa bei festgelegter Auswurföffnung Bewegungen des Gerüsts und der Fräse ausgleichen, wobei ein kontinuierlicher Transport des abgetrennten Futtermaterials vom Nahbereich der Fräse in den Transportbehälter, unabhängig von der Position der Fräse, gewährleistet ist.

Bei einer bevorzugten Ausführungsvariante der erfindungsgemäßen Vorrichtung zur Entnahme von Futter kann des Weiteren vorgesehen sein, dass eine im Umfangsbereich der Fräse angeordnete Stützeinrichtung zur Schnitttiefenbegrenzung vorgesehen ist. Die Stützeinrichtung schützt während des Abtrennens beispielsweise von Silage vor einem "Hineinfressen" der Fräse in die Silage, das zu einem ungewollten Abstoppen des Fräsvorganges führen könnte

In einer weiteren bevorzugten Ausführungsvariante umfasst die Fräse einen Leistungssensor zur Erfassung der aufgenommenen Leistung. Der Leistungssensor dient somit der Überwachung und Regelung der Vorschubgeschwindigkeit der Fräse. Wenn es beispielsweise zu einem Anstieg der Leistung der Fräse kommt, wird die Vorschubgeschwindigkeit reduziert bis der Leistungssollwert der Fräse erreicht ist. Sollte der Leistungswert der Fräse abfallen, dann erhöht sich dementsprechend die Vorschubgeschwindigkeit. Diese Steuerung wird ebenfalls von der Steuereinrichtung übernommen.

Zudem wird vorgeschlagen, dass das verfahrbare Gerüst mit einer Aufwickeleinrichtung für eine das Futterlager bedeckende Abdeckfolie versehen ist. Um das Futtermittel vor Umwelteinflüssen wie Wind oder Regen zu schützen, ist das Futterlager in der Regel von einer Plane, vorzugsweise einer Siloabdeckplane, oder auch mehrerer Planen abgedeckt, die zudem mit einem Netz überspannt sein können, um die Planen vor einer Beschädigung durch Vögel zu schützen. Diese Plane dient auch zur luftdichten Versiegelung des Futtermittels, um den Gärprozess zu ermöglichen. Um die Folie zu befestigen ist es bekannt sie mit zeilenförmig verteilt angeordneten Sandsäcken zu beschweren. Um Futter aus dem Futterlager entnehmen zu können, müssen zuerst alle Sandsäcke in dem freizulegenden Abschnitt des Fahrsilos entfernt werden. Danach wird die Folie abschnittsweise in Richtung des gelagerten, nicht freizulegenden Futtermittels manuell umgeschlagen oder aufgerollt um Futtermittel freizulegen. Für diesen Vorgang ist in der Regel, je nach Breite des Fahrsilos, die Hilfe einer zweiten Person notwendig, wobei mitunter auch auf das Futterlager geklettert werden muss. Da sich dieser Vorgang äußert arbeitsaufwändig gestaltet und eine mitunter große Zeitdauer für das Umschlagen bzw. Aufwickeln der Folie notwendig ist, wird in der Regel ein größerer Abschnitt des Futtermittels freigelegt, als auf einmal entnommen werden soll. Der verbleibende freigelegte Abschnitt des Futtermittels wird nach der erfolgten Entnahme im Allgemeinen aufgrund des hohen Aufwands nicht wieder abgedeckt und ist demensprechend nicht mehr vor Witterungseinflüssen geschützt. Zudem wird auf eine gute Abdichtung des Randbereiches mithilfe entsprechend nachgeschlichteter Sandsäcke nicht immer geachtet, wodurch die Qualität des Futtermittels leidet. Die vorliegende Erfindung bietet aufgrund des am Futterlager verbleibenden, verfahrbaren Gerüstes die Möglichkeit einer entscheidenden Verbesserung, indem am Gerüst eine Aufwickeleinrichtung für eine das Futterlager bedeckende Abdeckfolie vorgesehen wird. Diese Aufwickeleinrichtung kann so ausgeführt werden, dass sie einerseits ein abdichtendes Aufliegen der Abdeckfolie in den noch unbearbeiteten Bereichen des Futterlagers erlaubt, und andererseits die Abdeckfolie in den zu bearbeitenden Bereichen des Futterlagers aufnimmt und aufwickelt. Dabei kann die Aufwickeleinrichtung auch so ausgeführt werden, dass die aufgenommenen Bereiche der Abdeckfolie sich über das Trennwerkzeug und Teile des verfahrbaren Gerüsts spannen, um auf diese Weise sowohl dem Trennwerkzeug und dem Gerüst, als auch den freigelegten Bereichen des Futterlagers einen Schutz vor Witterungseinflüssen zu bieten. In einfacheren Ausführungen ist die Aufwickeleinrichtung hingegen als eine auf dem Futterlager dichtend aufliegende Rolle ausgeführt. Die Wickelbewegung der Aufwickeleinrichtung wird dabei jeweils mit der Vorschubbewegung des Gerüsts in das Futterlager gekoppelt sein. Diese Vorschubbewegung findet im Rahmen der vorliegenden Erfindung automatisiert statt, sodass der vorzunehmende Vorschub des Gerüsts auch für die Steuerung der Wickelbewegung der Aufwickeleinrichtung herangezogen werden kann.

Das am Futterlager verbleibende, verfahrbare Gerüst bietet ferner die Möglichkeit zusätzliche Komponenten zu befestigen, um die Qualität des abzutrennenden Futters bewerten zu können. So wird etwa vorgeschlagen, dass das verfahrbare Gerüst mit einem Temperaturfühler zur berührungslosen Messung der Futtermitteltemperatur des Futterlagers versehen ist. Der Temperaturfühler kann mit einer Überwachungseinrichtung gekoppelt sein, die die gemessene Futtermitteltemperatur überwacht und ein Warnsignal generiert, falls die Futtermitteltemperatur einen zulässigen Wertebereich überschreitet. Eine zu hohe Futtermitteltemperatur kann nämlich ein Hinweis auf eine qualitative Beeinträchtigung des Futtermittels sein, dem unbedingt nachgegangen werden sollte. Freilich eignet sich auch ein zu kaltes Futtermittel nicht zur Verfütterung an Tiere.

Zudem kann vorgesehen sein, dass das verfahrbare Gerüst mit einer Kamera versehen ist, die mit einer Bildauswerteeinheit zur Erkennung optisch sichtbarer Qualitätsmängel des abzutrennenden Futters gekoppelt ist. Ein solcher optisch sichtbarer Qualitätsmangel kann etwa die Bildung von Schimmel sein, der mittels automatisierter Bilderkennung von entsprechender Analysesoftware leicht zu erkennen ist. Falls ein Qualitätsmangel von der Bildauswerteeinheit erkannt wird, kann wiederum ein Warnsignal generiert werden. Die Kamera ist dabei selbstredend auf die dem Gerüst zugewandte Seite des Futterlagers gerichtet und erfasst diese Seite des Futterlagers zur Gänze oder zumindest abschnittsweise.

Des Weiteren kann das verfahrbare Gerüst mit Sensoren oder Kameras zur Detektion von Menschen oder Tieren im Betriebsbereich der Trenneinrichtung und der Fördereinrichtung versehen sein. Falls die Anwesenheit von Menschen oder Tieren detektiert wird, kann etwa ein Warnsignal generiert werden, oder sofort eine Abschaltung des Trennwerkzeugs vorgenommen werden. Sensoren dieser Art erhöhen die Sicherheit der erfindungsgemäßen Vorrichtung, die im praktischen Betrieb immerhin vollständig automatisiert arbeiten soll.

### KURZE BESCHREIBUNG DER FIGUREN

Die Erfindung wird in weiterer Folge anhand von zwei Ausführungsbeispielen mithilfe der beiliegenden Zeichnungen näher erläutert. Hierbei zeigen die
- Fig. 1: eine axonometrische Darstellung einer Ausführungsform der erfindungsgemäßen Vorrichtung zur Entnahme von Futter aus einem Flachsilo,
- Fig. 2: eine Ansicht auf die erfindungsgemäße Vorrichtung der Fig. 1 zur Entnahme von Futter aus einem Flachsilo von oben gesehen,
- Fig. 3: eine Vorderansicht der erfindungsgemäßen Vorrichtung der Fig. 1 zur Entnahme von Futter aus einem Flachsilo,
- Fig. 4: eine Seitenansicht der erfindungsgemäßen Vorrichtung der Fig. 1 zur Entnahme von Futter aus einem Flachsilo, und
- Fig. 5: eine axonometrische Darstellung einer zweiten Ausführungsform der erfindungsgemäßen Vorrichtung zur Entnahme von Futter aus einem Flachsilo.

### WEGE ZUR AUSFÜHRUNG DER ERFINDUNG

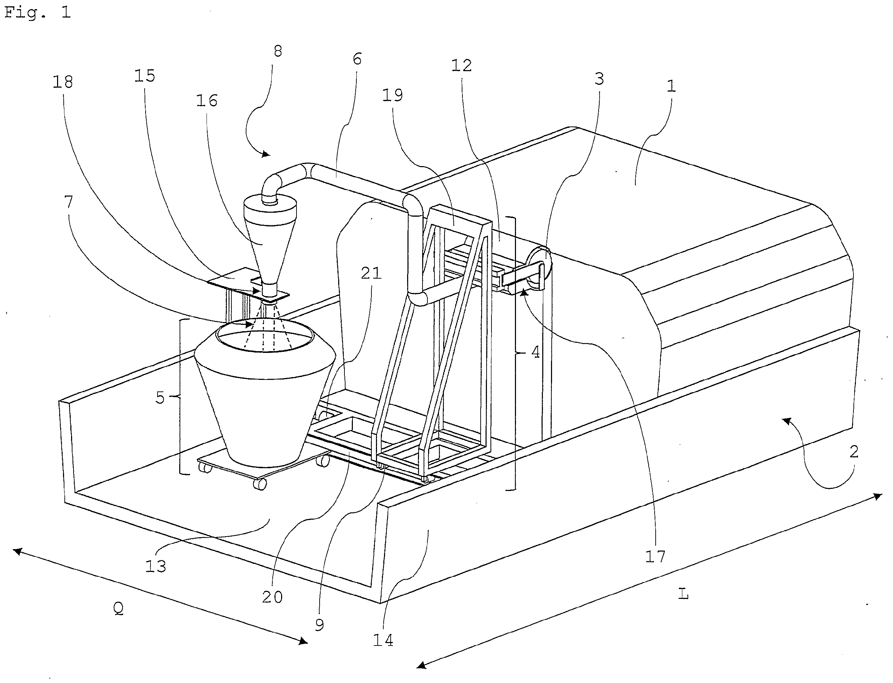

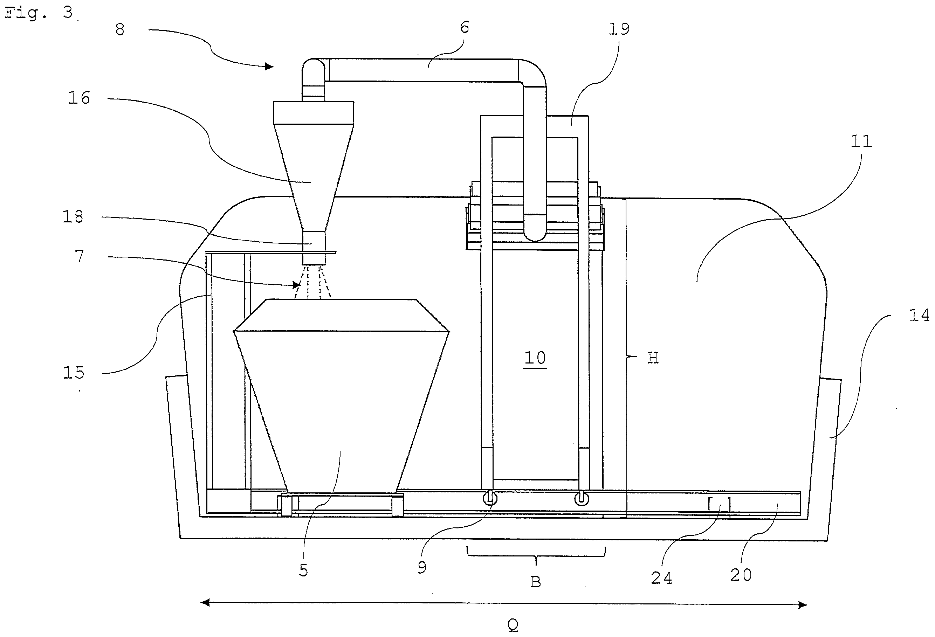

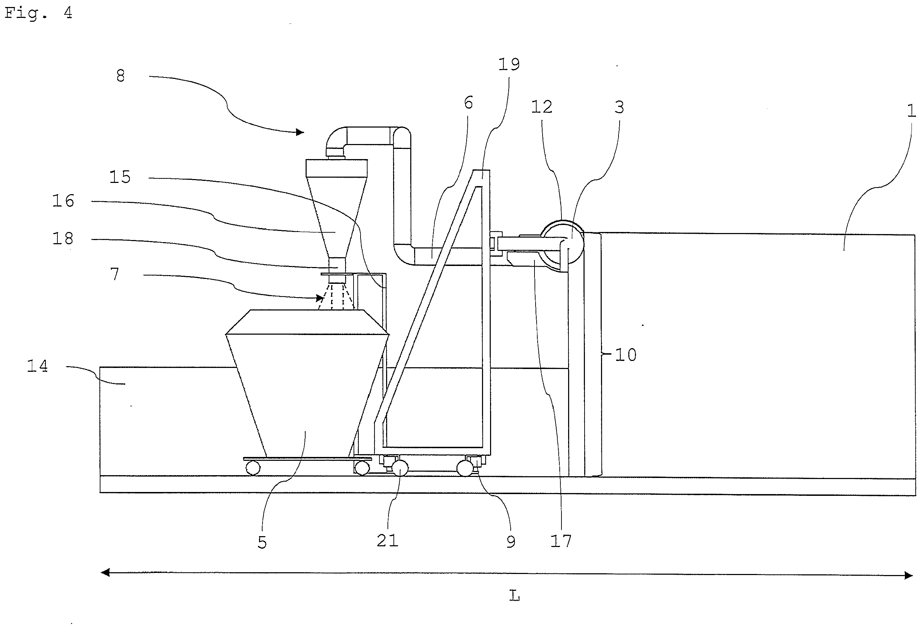

Die Figuren 1 - 4 zeigen eine erfindungsgemäße Vorrichtung zur Entnahme von Futter aus einem Futterlager 1, im gezeigten Ausführungsbeispiel etwa Silage, wobei das Futter in einem Flachsilo 2 umfassend einen befahrbaren Boden 13 und Seitenwände 14 gelagert ist. Die Vorrichtung zur Entnahme von Futter umfasst ein als Fräse 3 ausgeführtes Trennwerkzeug zum Abtrennen der Silage, wobei die Fräse 3 auf einem Gerüst 4 angeordnet ist. Das Gerüst 4 umfasst im gezeigten Ausführungsbeispiel zwei Teile, wobei ein erster Gerüstteil 19 mit Hilfe von Rollen 9 auf einem zweiten Gerüstteil 20 in Querrichtung Q des Flachsilos bewegbar geführt ist. Der zweite Gerüstteil 20 ist wiederum mit Rollen 21 in Längsrichtung L des Flachsilos 2 bewegbar. Beide Gerüstteile 19, 20 werden mit einem elektrischen Motor angetrieben.

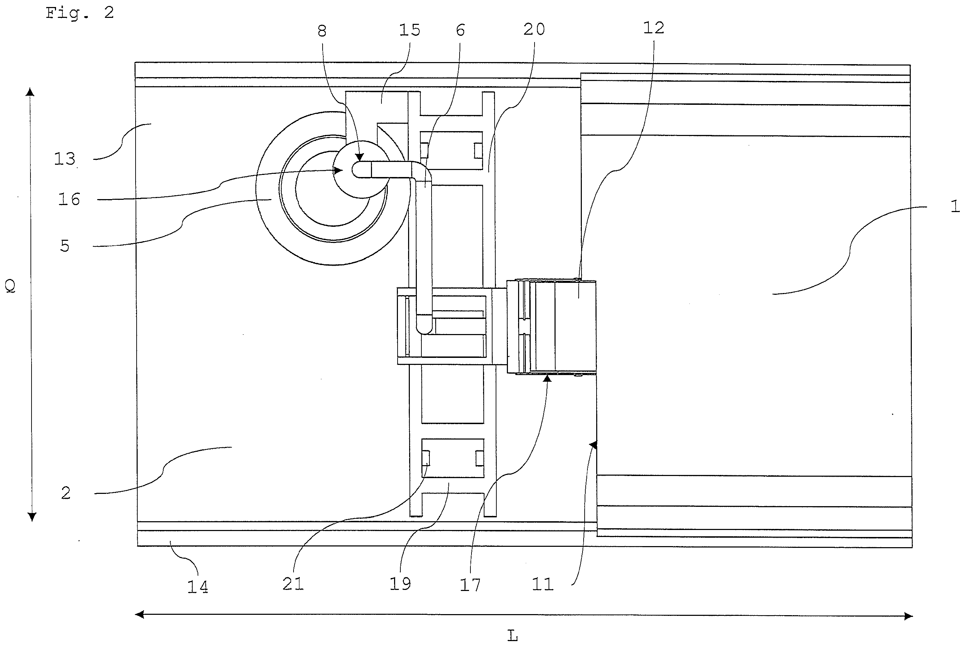

Die Fräse 3 ist am ersten Gerüstteil 19 vertikal bewegbar geführt und umfasst einen Leistungssensor zur Erfassung der aufgenommenen Leistung, wobei der Leistungssensor der Überwachung und Regelung der Vorschubgeschwindigkeit der Fräse 3 dient. Somit kann die Fräse 3 autonom vertikale Bahnen 10 mit Höhe H (siehe Figur 2), die der Höhe der Silage entspricht, und einer Breite B, die der Breite der Fräse 3 entspricht, beginnend von der oberen oder der unteren Kante der Silage von der Silage abtragen. In Figur 2 ist erkennbar, dass die Fräse 3 in dem dargestellten Ausführungsbeispiel auf der rechten Seite der Schneidfläche 11 mit dem Abtragen der Silage beginnt und dann in weiterer Folge mehrere nebeneinanderliegende Bahnen 10 der Silage abtrennt, solange bis die Fräse 3 an der linken Seite der Schneidfläche 11 ankommt. In weiterer Folge trennt die Fräse 3 nun beginnend auf der linken Seite nebeneinanderliegende Bahnen 10 der Silage ab, bis die Fräse 3 wiederum auf der rechten Seite der Schneidfläche 11 angekommen ist. Alternativ kann die Fräse 3 nach Erreichen der linken Seite auch zur rechten Seite verfahren werden, um dort mit einem neuerlichen Schichtabtrag zu beginnen.

Sobald die Fräse 3 eine Bahn 10 der Silage, wie oben beschrieben, abgetragen hat, entfernt sich der zweite Gerüstteil 20 in Längsrichtung L von der Schneidfläche 11 der Silage, sodass die Fräse 3 die Schneidfläche 11 nicht mehr berührt. Anschließend verfährt die Fräse 3 mit Hilfe des ersten Gerüstteils 19 in Querrichtung Q um einen Abstand, der der Breite der Fräse 3 entspricht. Sobald diese Position erreicht wurde, bewegt sich wiederum der zweite Gerüstteil 20 in Längsrichtung L in Richtung der Schneidfläche 11, bis die Fräse 3 eine vorgegeben Schnitttiefe erreicht hat und die Fräse 3 beginnt eine weitere Bahn 10 der Silage abzutragen.

Weiters umfasst die Fräse 3 eine Stützeinrichtung 12, die im Umfangsbereich der Fräse 3 angeordnet und zum Abstützen der Fräse 3 an der Schneidfläche 11 der Silage vorgesehen ist. Durch Verwendung der Stützeinrichtung 12 wird ein "Hineinfressen" der Fräse 3 in die Silage verhindert, was zu einem ungewollten Abstoppen des Fräsvorganges führen könnte.

Die Vorrichtung zur Entnahme von Silage 1 umfasst weiters einen oder mehrere elektrisch betriebene Transportbehälter 5 zur Aufnahme des von der Fräse 3 abgetrennten Futtermaterials 7. Für die Navigation der Transportbehälter 5 außerhalb des Flachsilos 2 können beispielsweise magnetische Bodenmarker verwendet werden. Innerhalb des Flachsilos 2 navigieren die Transportbehälter 5 mittels Ultraschall- und Abstandssensoren und sind so in der Lage, Objekte berührungslos zu erkennen und ihre Entfernung zum Sensor zu messen, wodurch sich die Transportbehälter 5 innerhalb des Flachsilos 2 autonom bewegen können.

Außerdem umfasst die Vorrichtung ein Gebläse zur Förderung des von der Fräse 3 abgetrennten Futtermaterials 7 in den Transportbehälter 5. Das Gebläse umfasst einen Schlauch 6 und einen Ansaugstutzen 16, zudem weist es eine Ansaugöffnung 17 im Nahbereich der Fräse 3 und eine Auswurföffnung 18 auf. Die Befüllposition des Transportbehälters 5 befindet sich direkt unterhalb der Auswurföffnung 18. Im vorliegenden Ausführungsbeispiel ist die Auswurföffnung 18 starr mittels einer Halterung 15 mit dem zweiten Gerüstteil 20 verbunden. Die Befüllposition ändert sich somit nur in Längsrichtung L bei fortschreitender Abtragung der Silage. Der Schlauch 6 ist dabei flexibel ausgeführt, sodass der Schlauch 6 trotz der fixierten Auswurföffnung 18 die Bewegung der Fräse 3 entlang der gesamten Breite der Silage ermöglicht. Mit Hilfe des Gebläses wird abgetrenntes Futtermaterial 7 vom Bereich der Schneidfläche 11 der Fräse 3 über den Schlauch 6 in den Transportbehälter 5 befördert. Sobald die Fräse 3 im unteren Bereich der Schneidfläche 11 Silage abtrennt, fördert das Gebläse durch den Ansaugstrom auch auf dem Boden 13 liegende Silage, die zuvor während des Abtrennens der Silage durch die Fräse 3 auf den Boden 13 gefallen ist, in den Transportbehälter 5, wodurch Bröckelverluste vermieden werden und der Boden 13 sauber gehalten wird.

Ein neuer autonomer Fütterungsablauf beginnt, indem der Transportbehälter 5 mittels der oben beschriebenen magnetischen Bodenmarker zum Flachsilo 2 navigiert. Sobald sich der Transportbehälter 5 vor dem Flachsilo 2 etwa in einer vorgegebenen Warteposition befindet, sendet der Transportbehälter 5 über eine Signal- oder Datenverbindung ein Meldesignal an die Trenneinrichtung oder eine ihr zugeordnete Überwachungseinrichtung, die in weiterer Folge prüft, ob der Transportbehälter 5 in den Flachsilo 2 einfahren darf. Falls die Trenneinrichtung oder eine ihr zugeordnete Überwachungseinrichtung eine Freigabe erteilt, da sich derzeit kein anderer Transportbehälter 5 in Befüllposition befindet, fährt der Transportbehälter 5 in den Flachsilo 2 ein. Sollte sich ein anderer Transportbehälter 5 in Befüllposition befinden, so erhält der anfragende Transportbehälter 5 einen Wartebefehl von der Trenneinrichtung oder einer ihr zugeordneten Überwachungseinrichtung und verbleibt in der Warteposition vor dem Flachsilo 2, bis der andere Transportbehälter 5 mit abgetrenntem Futter 7 befüllt wurde und den Flachsilo 2 verlassen hat. Sobald der wartende Transportbehälter 5 den Fahrbefehl von der Trenneinrichtung oder einer ihr zugeordneten Überwachungseinrichtung erhält, fährt er in den Flachsilo 2 ein und navigiert mittels der oben beschriebenen Ultraschall- und Abstandssensoren zu der Befüllposition, die sich unterhalb der starr mit dem zweiten Gerüstteil 20 verbundenen Auswurföffnung 18 befindet.

Sobald der Transportbehälter 5 die Befüllposition erreicht hat, sendet der Transportbehälter 5 ein Startsignal an die Trenneinrichtung, woraufhin die Fräse 3 aktiviert wird und der zweite Gerüstteil 20 sich in Längsrichtung L in Richtung der Schneidfläche 11 bewegt, bis die Fräse 3 eine vorgegebene Schnitttiefe erreicht hat. Die Fräse 3 beginnt die Silage abzutrennen und der Transportbehälter 5 wird mit Hilfe des Gebläses mit abgetrenntem Futtermaterial 7 befüllt, wobei die Menge des abgetrennten Futtermaterials 7 mittels einer Wiegeeinrichtung überwacht wird. Nachdem der Transportbehälter 5 wie vorgegeben befüllt wurde, sendet die Wiegeeinrichtung ein Stoppsignal an die Trenneinrichtung, sodass die Fräse 3 das Abtrennen der Silage beendet. Daraufhin wird die Fräse 3 vom zweiten Gerüstteil 20 in Längsrichtung L von der Schneidfläche 11 entfernt und der Transportbehälter 5 verlässt die Befüllposition. Mit Hilfe der Ultraschall- und Abstandssensoren bewegt sich der Transportbehälter 5 aus dem Flachsilo 2 und navigiert außerhalb des Flachsilos 2 mit Hilfe der magnetischen Bodenmarker zur Fütterungsstelle.

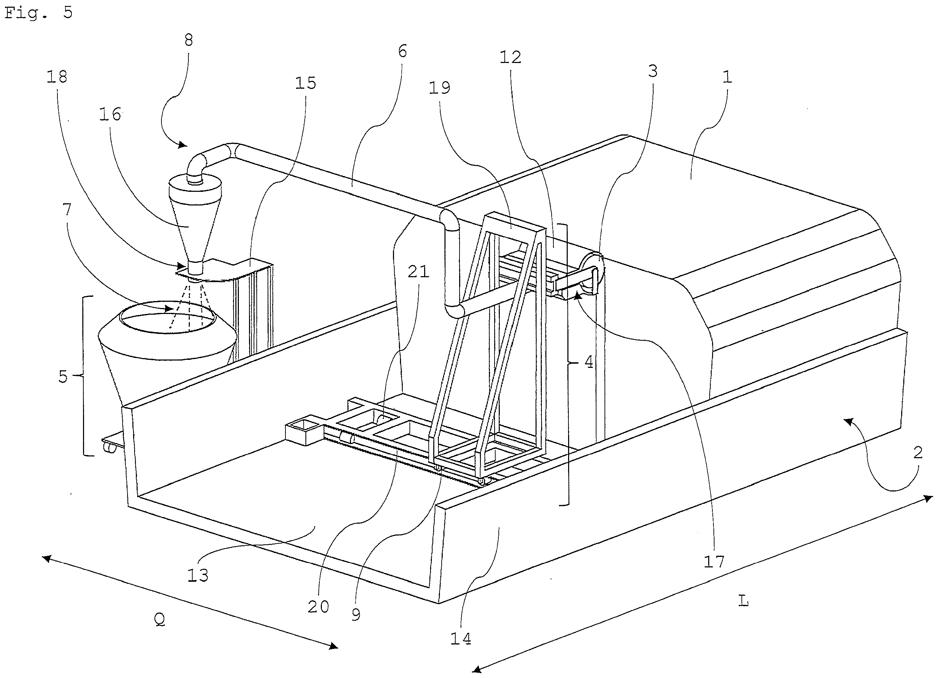

Die Figur 5 zeigt ein weiteres Ausführungsbeispiel der erfindungsgemäßen Vorrichtung zur Entnahme von Futter aus einem Futterlager 1, wobei es sich auch hier bei dem Futter um Silage handelt, die in einem Flachsilo 2 gelagert ist. Der Aufbau des gezeigten Ausführungsbeispiels entspricht grundsätzlich jenem des ersten Ausführungsbeispiels, allerdings befindet sich die Befüllposition an einer ortsfesten Position außerhalb des Flachsilos 2, wobei auch die Auswurföffnung 18 des Gebläses außerhalb des Flachsilos 2 direkt über der Befüllposition angeordnet ist. Die Auswurföffnung 18 ist starr mit einer Halterung 15 verbunden, die sich ebenfalls außerhalb des Flachsilos 2 befindet und ihre Position auch bei fortschreitender Abtragung der Silage nicht ändert. Somit ändert sich auch die Befüllposition bei fortschreitender Abtragung der Silage nicht.

Auch im zweiten Ausführungsbeispiel wird mit Hilfe des Gebläses abgetrenntes Futtermaterial 7 vom Bereich der Schneidfläche 11 der Fräse 3 über die Fördereinrichtung 8 in den Transportbehälter 5 gefördert. Dabei muss die Fördereinrichtung 8 jedoch so ausgeführt sein, dass je nach Position der Fräse 3 in Querrichtung Q und in Längsrichtung L unterschiedlich lange Förderstrecken zwischen der Ansaugöffnung 17 und der Auswurföffnung 18 ausgeglichen werden können. Hierfür bestehen unterschiedliche Möglichkeiten, so könnte etwa ein entsprechend flexibler Schlauch 6 mit balgartigen Abschnitten verwendet werden, sodass er sich verlängern und verkürzen lässt. Zudem wäre es auch möglich, die Fördereinrichtung 8 mit teleskopierbaren Abschnitten vorzusehen. Auch eine Kombination der beiden oben erwähnten Varianten wäre denkbar. In Figur 5 ist der Schlauch 6 nur schematisch dargestellt, sodass die tatsächliche Ausführungsart des Schlauchs 6 offen bleibt. Auch in diesem Ausführungsbeispiel fördert das Gebläse durch den Ansaugstrom zusätzlich auf dem Boden 13 liegende Silage, sobald die Fräse 3 im unteren Bereich der Schneidfläche 11 Silage abtrennt, die zuvor während des Abtrennens der Silage durch die Fräse 3 auf den Boden gefallen ist, in den Transportbehälter 5, wodurch Bröckelverluste vermieden werden und der Boden 13 sauber gehalten wird.

In diesem Ausführungsbeispiel beginnt ein neuer autonomer Fütterungsablauf, indem der Transportbehälter 5 mittels der oben beschriebenen magnetischen Bodenmarker zu einer Warteposition außerhalb des Flachsilos 2 navigiert. Sobald er sich in der vorgegebenen Warteposition befindet, sendet der Transportbehälter 5 über eine Signal- oder Datenverbindung ein Meldesignal an die Trenneinrichtung oder eine ihr zugeordnete Überwachungseinrichtung, die in weiterer Folge prüft, ob der Transportbehälter 5 zur Befüllposition, die sich, wie oben beschrieben, ebenfalls außerhalb des Flachsilos 2 befindet, weiterfahren darf. Falls die Trenneinrichtung oder eine ihr zugeordnete Überwachungseinrichtung eine Freigabe erteilt, da sich derzeit kein anderer Transportbehälter 5 in Befüllposition befindet, fährt der Transportbehälter 5 zur Befüllposition. Sollte sich bereits ein anderer Transportbehälter 5 in Befüllposition befinden, so erhält der anfragende Transportbehälter 5 einen Wartebefehl von der Trenneinrichtung oder einer ihr zugeordneten Überwachungseinrichtung und verbleibt in der Warteposition, bis der andere Transportbehälter 5 mit abgetrenntem Futter 7 befüllt wurde und die Befüllposition verlassen hat. Sobald der wartende Transportbehälter 5 den Fahrbefehl von der Trenneinrichtung oder einer ihr zugeordneten Überwachungseinrichtung erhält, fährt er zur Befüllposition. Wenn der Transportbehälter die Befüllposition erreicht hat startet die Befüllung des Transportbehälters 5 wie im ersten Ausführungsbeispiel beschrieben. Freilich könnte auch vorgesehen sein, dass der Transportbehälter 5 direkt die Befüllposition unterhalb der Auswurföffnung 18 anfährt, etwa wenn nur ein Transportbehälter 5 eingesetzt wird.

Die Erfindung stellt somit eine Vorrichtung zur Entnahme von Futter aus einem Futterlager bereit, die Futterverluste verringert sowie die Sauberhaltung der Bodenfläche des Futterlagers erleichtert. Zudem wird das abgetrennte Futtermaterial 7 durch den Transport im Luftstrom aufgelockert und belüftet, was die Bekömmlichkeit für das Vieh erhöht.

### BEZUGSZEICHENLISTE

- 1: Futterlager
- 2: Flachsilo
- 3: Fräse
- 4: Gerüst
- 5: Transportbehälter
- 6: Schlauch
- 7: Abgetrenntes Futtermaterial
- 8: Fördereinrichtung
- 9: Rollen des ersten Gerüstteils
- 10: Vertikale Bahn
- 11: Schneidfläche
- 12: Stützeinrichtung
- 13: Boden
- 14: Seitenwände
- 15: Halterung
- 16: Ansaugstutzen
- 17: Ansaugöffnung
- 18: Auswurföffnung
- 19: Erster Gerüstteil
- 20: Zweiter Gerüstteil
- 21: Rollen des zweiten Gerüstteils

- L: Längsrichtung
- Q: Querrichtung
- H: Höhe
- B: Breite

## Patentansprüche

1. Vorrichtung zur Entnahme von Futter aus einem Futterlager (1), umfassend eine Trenneinrichtung zum Abtrennen von Futter vom Futterlager (1), eine Fördereinrichtung (8) zur Förderung von abgetrenntem Futtermaterial (7) von einem an der Trenneinrichtung angeordneten Aufgabebereich der Fördereinrichtung (8) zu einem Abgabebereich der Fördereinrichtung (8), sowie einen zur Befüllung mit abgetrenntem Futtermaterial (7) in einer Befüllposition im Abgabebereich der Fördereinrichtung vorgesehenen Transportbehälter (5), wobei die Trenneinrichtung ein als Fräse (3) ausgeführtes Trennwerkzeug umfasst, und die Fördereinrichtung (8) als Gebläse ausgeführt ist, wobei der Aufgabebereich als eine im Bereich der Fräse (3) angeordnete Ansaugöffnung (17) des Gebläses ausgeführt ist, und der Abgabebereich als eine oberhalb des Transportbehälters (5) in seiner Befüllposition angeordnete Auswurföffnung (18) des Gebläses ausgeführt ist, **dadurch gekennzeichnet, dass** der Transportbehälter (5) als ein unabhängig von der Trenneinrichtung verfahrbarer, selbstfahrender Wagen ausgeführt ist, der zugleich als Mischbehälter mit einem Mischer für das aufgenommene Futter ausgeführt ist und eine die Menge des aufgenommenen Futters überwachende Wiegeeinrichtung oder Volumenkontrolle aufweist.

2. Vorrichtung zur Entnahme von Futter nach Anspruch 1,
**dadurch gekennzeichnet, dass** die Fräse (3) auf einem verfahrbaren Gerüst (4) angeordnet ist.

3. Vorrichtung zur Entnahme von Futter nach Anspruch 2,
**dadurch gekennzeichnet, dass** das Gerüst (4) ein erstes Gerüstteil (19) sowie ein zweites Gerüstteil (20) umfasst, wobei die Fräse (3) am ersten Gerüstteil (19) vertikal bewegbar geführt ist, und der erste Gerüstteil (19) auf dem zweiten Gerüstteil (20) horizontal bewegbar geführt ist.

4. Vorrichtung zur Entnahme von Futter nach Anspruch 3,
**dadurch gekennzeichnet, dass** der zweite Gerüstteil (20) in einer senkrecht zur vertikalen Bewegungsrichtung der Fräse (3) und senkrecht zur horizontalen Bewegungsrichtung des ersten Gerüstteils (19) horizontal bewegbar ist.

5. Vorrichtung zur Entnahme von Futter nach einem der Ansprüche 1 bis 4, **dadurch gekennzeichnet, dass** das Gebläse einen flexiblen Schlauch (6), der die Ansaugöffnung (17) mit der Auswurföffnung (18) verbindet, umfasst.

6. Vorrichtung zur Entnahme von Futter nach einem der Ansprüche 1 bis 5, **dadurch gekennzeichnet, dass** eine im Umfangsbereich der Fräse angeordnete Stützeinrichtung (12) zur Schnitttiefenbegrenzung vorgesehen ist.

7. Vorrichtung zur Entnahme von Futter nach einem der Ansprüche 1 bis 6, **dadurch gekennzeichnet, dass** die Fräse einen Leistungssensor zur Erfassung der aufgenommenen Leistung umfasst.

8. Vorrichtung nach einem der Ansprüche 2 bis 7, **dadurch gekennzeichnet, dass** das verfahrbare Gerüst (4) mit einer Aufwickeleinrichtung für eine das Futterlager (1) bedeckende Abdeckfolie versehen ist.

9. Vorrichtung nach einem der Ansprüche 2 bis 8, **dadurch gekennzeichnet, dass** das verfahrbare Gerüst (4) mit einem Temperaturfühler zur berührungslosen Messung der Futtermitteltemperatur des Futterlagers (1) versehen ist.

10. Vorrichtung nach einem der Ansprüche 2 bis 9, **dadurch gekennzeichnet, dass** das verfahrbare Gerüst (4) mit einer Kamera versehen ist, die mit einer Bildauswerteeinheit zur Erkennung optisch sichtbarer Qualitätsmängel des abzutrennenden Futters gekoppelt ist.

11. Vorrichtung nach einem der Ansprüche 2 bis 10,
**dadurch gekennzeichnet, dass** das verfahrbare Gerüst (4) mit Sensoren oder Kameras zur Detektion von Menschen oder Tieren im Betriebsbereich der Trenneinrichtung und der Fördereinrichtung (8) versehen ist.

## Claims

1. A device for removing feed from a feed store (1), comprising a separating unit for separating feed from the feed store (1), a conveyor unit (8) for conveying separated feed material (7) from a supply region of the conveyor unit (8) arranged on the separating unit to a discharge region of the conveyor unit (8), and also a transport container (5) provided for filling with separated feed material (7) in a filling position in the discharge region of the conveyor unit, wherein the separating unit comprises a separating tool embodied as a milling machine (3), and the conveyor unit (8) is embodied as a fan, wherein the supply region is embodied as a suction opening (17) of the fan arranged in the region of the milling machine (3), and the discharge region is embodied as an ejection opening (18) of the fan arranged above the transport container (5) in its filling position, **characterized in that** the transport container (5) is embodied as a self-propelled wagon movable independently of the separating unit, which is also embodied as a mixing container having a mixer for the received feed and includes a weighing unit or volume monitor which monitors the quantity of the received feed.

2. The device for removing feed according to Claim 1, **characterized in that** the milling machine (3) is arranged on a movable framework (4).

3. The device for removing feed according to Claim 2, **characterized in that** the framework (4) comprises a first framework part (19) and a second framework part (20), wherein the milling machine (3) is guided so it is vertically movable on the first framework part (19), and the first framework part (19) is guided so it is horizontally movable on the second framework part (20).

4. The device for removing feed according to Claim 3, **characterized in that** the second framework part (20) is horizontally movable in a movement direction of the separating tool (3) perpendicular to the vertical and perpendicular to the horizontal movement direction of the first framework tool (19).

5. The device for removing feed according to any one of Claims 1 to 4, **characterized in that** the fan comprises a flexible hose (6), which connects the suction opening (17) to the ejection opening (18).

6. The device for removing feed according to any one of Claims 1 to 5, **characterized in that** a support unit (12) arranged in the circumferential region of the milling machine is provided for limiting the cutting depth.

7. The device for removing feed according to any one of Claims 1 to 6, **characterized in that** the milling machine comprises a power sensor for detecting the consumed power.

8. The device according to any one of Claims 2 to 7, **characterized in that** the movable framework (4) is provided with a winding unit for a cover film covering the feed store (1).

9. The device according to any one of Claims 2 to 8, **characterized in that** the movable framework (4) is provided with a temperature probe for contactless measurement of the feed temperature of the feed store (1).

10. The device according to any one of Claims 2 to 9, **characterized in that** the movable framework (4) is provided with a camera, which is coupled to an image analysis unit for recognizing optically visible quality deficiencies of the feed to be separated.

11. The device according to any one of Claims 2 to 10, **characterized in that** the movable framework (4) is provided with sensors or cameras for detecting humans or animals in the operating region of the separating unit and the conveyor unit (8).

## Revendications

1. Dispositif pour prélever du fourrage d'un magasin à fourrage (1), comprenant un moyen de séparation pour séparer le fourrage du magasin à fourrage (1), un moyen de transport (8) pour transporter la matière fourragère séparée (7) d'une zone de chargement du moyen de transport (8) qui est disposée sur le moyen de séparation vers une zone de déchargement du moyen de transport (8), ainsi qu'un conteneur de transport (5) prévu pour être rempli de la matière fourragère séparée (7) dans une position de remplissage dans la zone de déchargement du moyen de transport, dans lequel le moyen de séparation comprend un outil de séparation réalisé sous la forme d'une fraise (3) et le moyen de transport (8) est réalisé sous la forme d'une soufflante, dans lequel la zone de chargement est réalisée sous la forme d'une ouverture d'aspiration (17) de la soufflante disposée dans la zone de la fraise (3), et la zone de déchargement est réalisée sous la forme d'une ouverture d'éjection (18) de la soufflante disposée au-dessus du conteneur de transport (5) dans sa position de remplissage, **caractérisé en ce que** le conteneur de transport (5) est réalisé sous la forme d'un chariot déplaçable de manière autonome, indépendamment du moyen de séparation, qui est réalisé en même temps sous la forme d'un conteneur de mélange avec un mélangeur pour le fourrage reçu et présente un moyen de pesage ou un contrôle de volume qui surveille la quantité du fourrage reçu.

2. Dispositif pour prélever du fourrage selon la revendication 1, **caractérisé en ce que** la fraise (3) est disposée sur un bâti déplaçable (4).

3. Dispositif pour prélever du fourrage selon la revendication 2, **caractérisé en ce que** le bâti (4) comprend une première partie de bâti (19) et une deuxième partie de bâti (20), dans lequel la fraise (3) est guidée de manière mobile verticalement sur la première partie de bâti (19), et la première partie de bâti (19) est guidée de manière mobile horizontalement sur la deuxième partie de bâti (20).

4. Dispositif pour prélever du fourrage selon la revendication 3, **caractérisé en ce que** la deuxième partie de bâti (20) est mobile horizontalement dans une direction perpendiculaire à la direction de déplacement verticale de la fraise (3) et perpendiculaire à la direction de déplacement horizontale de la première partie de bâti (19).

5. Dispositif pour prélever du fourrage selon l'une des revendications 1 à 4, **caractérisé en ce que** la soufflante comprend un tuyau flexible (6) reliant l'ouverture d'aspiration (17) à l'ouverture d'éjection (18).

6. Dispositif pour prélever du fourrage selon l'une des revendications 1 à 5, **caractérisé en ce qu'**un moyen d'appui (12) disposé dans la zone périphérique de la fraise est prévu pour limiter la profondeur de coupe.

7. Dispositif pour prélever du fourrage selon l'une des revendications 1 à 6, **caractérisé en ce que** la fraise comprend un capteur de puissance pour détecter la puissance consommée.

8. Dispositif selon l'une des revendications 2 à 7, **caractérisé en ce que** le bâti déplaçable (4) est muni d'un moyen d'enroulement pour un film de protection recouvrant le magasin à fourrage (1).

9. Dispositif selon l'une des revendications 2 à 8, **caractérisé en ce que** le bâti déplaçable (4) est muni d'une sonde de température pour mesurer sans contact la température du fourrage du magasin à fourrage (1).

10. Dispositif selon l'une des revendications 2 à 9, **caractérisé en ce que** le bâti déplaçable (4) est muni d'une caméra qui est couplée à une unité d'évaluation d'image pour détecter des défauts de qualité optiquement visibles du fourrage à séparer.

11. Dispositif selon l'une des revendications 2 à 10, **caractérisé en ce que** le bâti déplaçable (4) est muni de capteurs ou de caméras pour détecter des humains ou des animaux dans la zone de fonctionnement du moyen de séparation et du moyen de transport (8).
